# EUROPEAN PATENT SPECIFICATION

(11) **EP 1 835 600 B1**
(45) Date of publication and mention of the grant of the patent: **08.02.2017**
(21) Application number: 07104280.8
(22) Date of filing: 15.03.2007
(51) Int. Cl.: H02K 16/02, H02K 21/14

(54) **Motor/generator**
Motor/Generator
Moteur/générateur

(30) Priority: 16.03.2006 JP 2006072558
(43) Date of publication of application: 19.09.2007
(73) Proprietor: Nissan Motor Company Limited, Yokohama-shi, Kanagawa 221-0023 (JP)
(72) Inventor: Shibukawa, Yuichi, KANAGAWA 243-0123 (JP)
(74) Representative: Hoefer & Partner Patentanwälte mbB

(56) References cited:
- JP-A- 8 080 019
- US-A1- 2004 119 373

## Description

The present invention relates to a motor/generator and particularly, but not exclusively, to a motor/generator arranged to change a magnetic resistance between a stator and a rotor thereof. Aspects of the invention also relate to a vehicle.

Japanese Laid-Open Patent Publication No. 2002-247822 discloses a conventional a motor/generator having a plurality of permanent magnets provided in a rotor thereof. In such conventional motor/generator, the induced voltage tends to become high when the motor/generator rotates at high speeds. Thus, in the conventional motor/generator disclosed in the above mentioned reference is configured and arranged to prevent the induced voltage from becoming high by increasing the magnetic resistance between a stator and the rotor when the rotor rotates at high speeds.

More specifically, the conventional motor/generator disclosed in the above mentioned reference includes the rotor, the stator having a plurality of coils, a magnetic resistance changing mechanism and an actuator. The conventional motor/generator is configured and arranged to generate a magnetic field when the coils of the stator are energized with an electric current such that the rotor is driven by using the magnetic field. The magnetic resistance changing mechanism is configured and arranged to change the magnetic resistance between the stator and the rotor by changing the size of a gap existing between the stator and the rotor. The actuator is configured and arranged to actuate the magnetic resistance changing mechanism in accordance with an operating state of the motor/generator.

The conventional motor/generator disclosed in the above mentioned reference requires a separate actuator to be provided in order to change the magnetic resistance between the stator and the rotor. As a result, the number of parts increases, and the cost of manufacturing the motor/generator becomes higher.

Another motor/generator is known from US 2004/119373 A1.

It is an aim of the invention to address this issue and to improve upon known technology. Embodiments of the invention provide a motor/generator that may be configured and arranged to change a magnetic resistance between a stator and a rotor without providing a separate actuator. Other aims and advantages of the invention will become apparent from the following description, claims and drawings.

Aspects of the invention therefore comprise a motor/generator and a vehicle as claimed in the appended claims.

In an embodiment, the first rotor member is disposed to face the stator with an axial gap being formed between the first rotor member and the stator with respect to a rotary shaft of the first rotor member The magnetic resistance changing mechanism may be configured and arranged to change a length of the axial gap between the first rotor member and the stator by using the second magnetic field to generate an axial force to move the first rotor member in an axial direction.

In an embodiment, the magnetic resistance changing mechanism includes a second rotor member disposed to face the stator with a radial gap being formed between the second rotor member and the stator with respect to the rotary shaft, the second rotor member being configured and arranged to be driven by using the second magnetic field and a power converting mechanism configured and arranged to convert torque of the second rotor member into the axial force to move the first rotor member in the axial direction.

In an embodiment, the power converting mechanism includes a screw section formed between the second rotor member and the rotary shaft.

In an embodiment, the power converting mechanism includes a loading cam mechanism formed between the first rotor member and the second rotor member.

In an embodiment, the first rotor member is disposed to face the stator with a radial gap being formed between the first rotor member and the stator such that the first rotor member and the stator at least partially overlap as viewed in a radial direction with respect to a rotary shaft of the first rotor member. The magnetic resistance changing mechanism may be configured and arranged to change a circumferential area of the first rotor member that overlaps with the stator as viewed in the radial direction by using the second magnetic field to generate an axial force to move the first rotor member in an axial direction.

In an embodiment, the magnetic resistance changing mechanism includes a second rotor member disposed to face the stator with a radial gap being formed between the second rotor member and the stator with respect to the rotary shaft, the second rotor member being configured and arranged to be driven by using the second magnetic field and a power converting mechanism configured and arranged to convert torque of the second rotor member into the axial force to move the first rotor member in the axial direction.

In an embodiment, the power converting mechanism includes a screw section formed between the second rotor member and the rotary shaft.

In an embodiment, the screw section is formed between the first rotor member and the second rotor member.

In an embodiment, the power converting mechanism includes a loading cam mechanism formed between the first rotor member and the second rotor member.

In an embodiment, the magnetic resistance changing mechanism includes a second rotor member disposed to face the stator with an axial gap being formed between the second rotor member and the stator with respect to the rotary shaft, the second rotor member being configured and arranged to be driven by using the second magnetic field and a power converting mechanism configured and arranged to convert torque of the second rotor member into the axial force to move the first rotor member in the axial direction.

The present invention will now be described, by way of example only, with reference to the accompanying drawings in which:
Figure 1 is a simplified cross sectional view of a motor/generator taken along a center axis of a rotary shaft of the motor/generator in accordance with a first embodiment of the present invention;
Figure 2 is a simplified cross sectional view of a motor/generator taken along a center axis of a rotary shaft of the motor/generator in accordance with a second embodiment of the present invention;
Figure 3 is a pair of diagrams (a) and (b) illustrating simplified cross sectional views of a motor/generator taken along a center axis of a rotary shaft of the motor/generator in accordance with a third embodiment of the present invention, wherein the diagram (a) illustrates a low rotations speed state and the diagram (b) illustrates a high rotational speed state;
Figure 4 is a simplified cross sectional view of a motor/generator taken along a center axis of a rotary shaft of the motor/generator in accordance with a fourth embodiment of the present invention;
Figure 5 is a simplified cross sectional view of a motor/generator taken along a center axis of a rotary shaft of the motor/generator in accordance with a fifth embodiment of the present invention; and
Figure 6 is a simplified cross sectional view of a motor/generator taken along a center axis of a rotary shaft of the motor/generator in accordance with a sixth embodiment of the present invention.

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

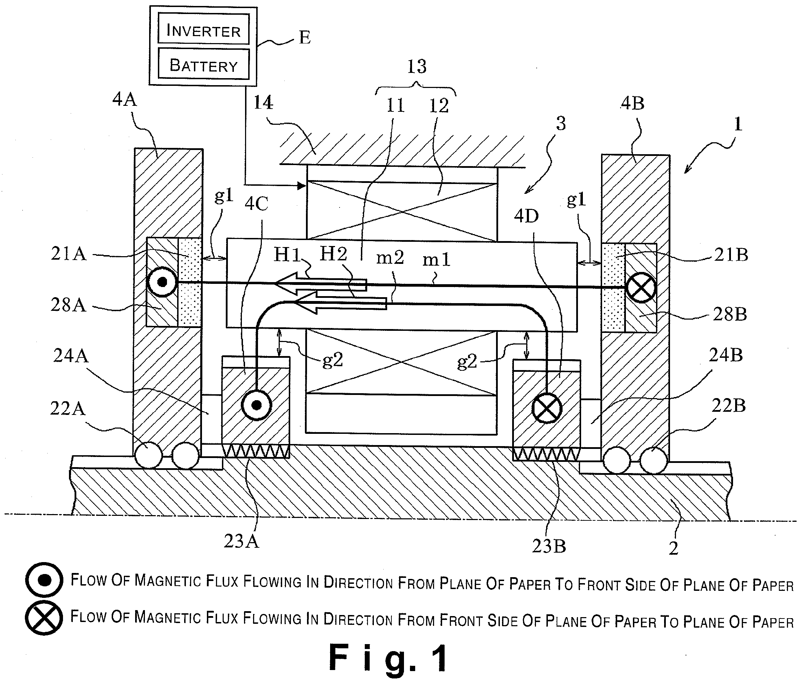

Referring initially to Figure 1, a motor/generator 1 is illustrated in accordance with a first embodiment of the present invention. Figure 1 is a simplified cross sectional view of the motor/generator 1 as taken along a center axis of a rotary shaft 2 of the motor/generator 1. In the first embodiment illustrated in Figure 1, the present invention is applied to the motor/generator 1 that is arranged as an axial gap motor/generator. More specifically, the motor/generator 1 includes a stator 3 and a pair of first and second drive rotors 4A and 4B (first rotor member) arranged to face the stator 3 with axial gaps g1 being formed therebetween. Moreover, as shown in Figure 1, the motor/generator 1 further includes a pair of first and second auxiliary rotors 4C and 4D (second rotor member) and a pair of screw sections 23A and 23B (power converting mechanism).

The stator 3 includes a plurality of stator units 13 that are arranged circumferentially with respect to the rotary shaft 2 and supported in a case member 14. Each of the stator units 13 includes a stator core 11 and a coil 12 wound around the stator core 11 as shown in Figure 1.

The first and second drive rotors 4A and 4B are circular disk-shaped members arranged on both axially facing sides of the stator 3. As shown in Figure 1, the first drive rotor 4A has a permanent magnet 21A and a back yoke 28A, and the second drive rotor 4B has a permanent magnet 21 B and a back yoke 28B. The first and second drive rotors 4A and 4B are mounted to the rotary shaft 2 on a pair of first and second ball splines 22A and 22B such that the first and second drive rotors 4A and 4B can move axially relative to the rotary shaft 2 but cannot rotate relative to the rotary shaft 2.

The first and second auxiliary rotors 4C and 4D are arranged radially inwardly of the stator 3 to face the stator 3 across radial gaps g2 (i.e., with the radial gaps g2 being formed between the stator 3 and the first and second auxiliary rotors 4C and 4D).

Each of the first and second auxiliary rotors 4C and 4D has a plurality of protrusions and a plurality of recessions arranged alternately along a circumferential direction on an outer peripheral portion thereof. The protrusions serve as protruding poles and constitute a plurality of magnetic poles. Alternatively, the first and second auxiliary rotors 4C and 4D can be provided with a plurality of permanent magnets instead of having the structure with the protrusions and the recessions.

As shown in Figure 1, a first thrust bearing 24A is provided between the first auxiliary rotor 4C and the first drive rotor 4A, and a second thrust bearing 24B is provided between the second auxiliary rotor 4C and the second drive rotor 4B. Thus, the first and second drive rotors 4A and 4B thrust against the first and second auxiliary rotors 4C and 4D via the first and second thrust bearings 24A and 24B, respectively.

The first and second auxiliary rotors 4C and 4D are mounted to the rotary shaft 2 by the screw sections 23A and 23B, respectively. The screw sections 23A and 23B include female screws formed on inner circumferential surfaces of the first and second auxiliary rotors 4C and 4D that face the rotary shaft 2, and male screws formed on outer circumferential surfaces of the rotary shaft 2. In the first embodiment illustrated in Figure 1, the first and second auxiliary rotors 4C and 4D and the screw sections 23A and 23B correspond to a magnetic resistance changing mechanism of the present invention.

In the axial gap type motor/generator 1 as illustrated in Figure 1, the coils 12 of the stator 3 are connected to an electric circuit E provided with an inverter and a battery, and the electric circuit E is configured to supply a composite electrical current to the coils 12. The composite electrical current includes a first current component configured to drive the first and second drive rotors 4A and 4B and a second current component configured to drive the first and second auxiliary rotors 4C and 4D. The composite electric current that can be used to drive the first and second drive rotors 4A and 4B and the first and second auxiliary rotors 4C and 4D in the present invention as described above is disclosed in U.S. Patent No. 6,049,152 assigned to the assignee of the present application. The entire disclosure of U.S. Patent No. 6,049,152 is hereby incorporated herein by reference.

The coils 12 are configured and arranged to generate a first magnetic field H1 when energized with the first current component of the composite electric current and a second magnetic field H2 when energized with the second current component of the composite electric current as shown in Figure 1. The first magnetic field H1 causes a first magnetic circuit m1 to form between the stator 3 and the first and second drive rotors 4A and 4B. The second magnetic field H2 causes a second magnetic circuit m2 to form between the stator 3 and the first and second auxiliary rotors 4C and 4D.

The first magnetic circuit m1 is configured such that the magnetic flux flows as follows: the stator core 11 (in plane of paper in Figure 1) → the permanent magnet 21A (in plane of paper in Figure 1) → the back yoke 28A → the permanent magnet 21A (above or in front of plane of paper in Figure 1, not shown) → the stator core 11 (above or in front of plane of paper in Figure 1, not shown) → the permanent magnet 21 B (above or in front of plane of paper in Figure 1, not shown) → the back yoke 28B → the permanent magnet 21 B (in plane of paper in Figure 1) → the stator core 11 (in plane of paper in Figure 1).

The second magnetic circuit m2 is configured such that the magnetic flux flows as follows: the stator core 11 (in plane of paper in Figure 1) → one of the protruding poles of the first auxiliary rotor 4C (below or behind plane of paper in Figure 1) → another one of the protruding poles of the first auxiliary rotor 4C (above or in front of plane of paper in Figure 1, not shown) → the stator core 11 (above or in front of plane of paper in Figure 1, not shown) → one of the protruding poles of the second auxiliary rotor 4D (above or in front of plane of paper in Figure 1, not shown) → another one of the protruding poles of the second auxiliary rotor 4D (below or behind plane of paper in Figure 1) → the stator core 11 (in plane of paper in Figure 1).

The operation of the first embodiment will now be explained. When the coils 12 are energized with the first current component of the composite electrical current, the stator 3 is configured and arranged to generate the first magnetic field H1 that drives the first and second drive rotors 4A and 4B. Therefore, the rotary shaft 2 is rotated along with the rotation of the first and second drive rotors 4A and 4B.

On the other hand, when the coils 12 are energized with the second current component of the composite electrical current, the stator 3 is configured and arranged to generate the second magnetic field H2 that drives the first and second auxiliary rotors 4C and 4D such that the first and second auxiliary rotors 4C and 4D rotate relative to the rotary shaft 2. When the relative rotation between the rotary shaft 2 and the first and second auxiliary rotors 4C and 4D occurs, the screw action of the screw sections 23A and 23B causes the first auxiliary rotor 4C to move toward the first drive rotor 4A and the second auxiliary rotor 4C to move toward the second drive rotor 4B. More specifically, when the first and second auxiliary rotors 4C and 4D are rotated relative to the rotary shaft 2, the first and second drive rotors 4A and 4B are moved axially away from the stator 3 due to the axial movements of the first and second auxiliary rotors 4C and 4D. Thus, the screw sections 23A and 23B are configured and arranged to convert the rotary torque of the first and second auxiliary rotors 4C and 4D into an axial force that moves the first and second drive rotors 4A and 4B in the axial direction. As a result, the lengths of the axial gaps g1 between the stator 3 and the first and second drive rotors 4A and 4B increase, and thus, the magnetic resistance between the stator 3 and the first and second drive rotors 4A and 4B increases.

Accordingly, with the first embodiment of the present invention, the first and second drive rotors 4A and 4B (that drive the rotary shaft 2) and the first and second auxiliary rotors 4C and 4D (that form the magnetic resistance changing mechanism) can both be selectively driven by supplying the composite electrical current to the single stator 3. As a result, it is not necessary to provide a separate actuator to change the magnetic resistance between the stator 3 and the first and second drive rotors 4A and 4B.

Moreover, in the first embodiment, when the rotational speed of the first and second drive rotors 4A and 4B is high and only a weak magnetic field is required, the composite electric current can be used to move the first and second drive rotors 4A and 4B axially outward and increase the lengths of the axial gaps g1. Increasing the lengths of the axial gaps g1 increases the magnetic resistance and decreases the magnetic flux between the stator 3 and the first and second drive rotors 4A and 4B. Therefore, the increase in the induced voltage due to the high rotational speed of the first and second drive rotors 4A and 4B can be suppressed. On the other hand, when the rotational speed of the first and second drive rotors 4A and 4B is low and a weak magnetic field is not required, the composite electric current can be controlled to move the first and second drive rotors 4A and 4B axially inward to decrease the lengths of the axial gaps g1.

Accordingly, the motor/generator 1 in accordance with the present invention is configured and arranged to drive the first and second drive rotors 4A and 4B and to change the magnetic resistance between the stator 3 and the first and second drive rotors 4A and 4B by energizing the coils 12 of the stator 3 with the composite electrical current. As a result, it is not necessary to provide a separate actuator and the number of parts and cost of manufacturing the motor/generator 1 can be prevented from increasing.

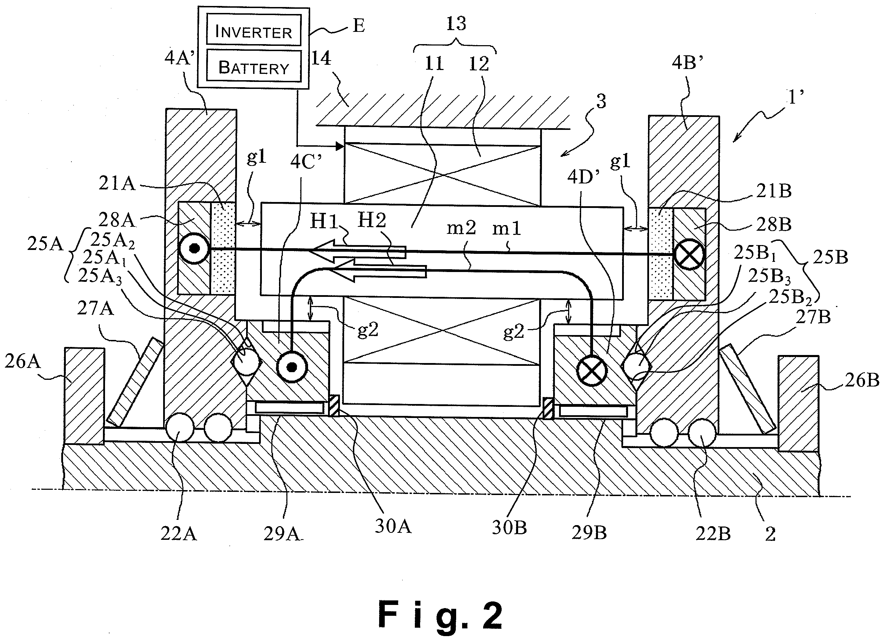

Referring now to Figure 2, a motor/generator 1' in accordance with a second embodiment will now be explained. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity. The parts of the second embodiment that differ from the parts of the first embodiment will be indicated with a single prime (').

The motor/generator 1' of the second embodiment differs from the motor/generator 1 of the first embodiment in a mechanism for moving a pair of first and second drive rotors 4A' and 4B' (first rotor member) in the axial direction. More specifically, the motor/generator 1' of the second embodiment is provided with a pair of loading cam mechanisms 25A and 25B as the power converting mechanism instead of the screw sections 23A and 23B used in the first embodiment as shown in Figure 1. The motor/generator 1' of the second embodiment also includes a pair of first and second auxiliary rotors 4C' and 4D' (second rotor member).

As shown in Figure 2, the loading cam mechanism 25A is provided between the first auxiliary rotor 4C' and the first drive rotor 4A', and the loading cam mechanism 25B is provided between the second auxiliary rotor 4D' and the second drive rotor 4B'. The loading cam mechanisms 25A and 25B have a conventional structure, such as the structure disclosed in, for example, Japanese Laid-Open Utility Model Patent Application Publication No. 05-075551. The entire disclosure of Japanese Laid-Open Utility Model Patent Application Publication No. 05-075551 is hereby incorporated herein by reference.

As shown in Figure 2, the loading cam mechanism 25A includes a cam surface 25A₁ formed on an axial inner surface of the first drive rotor 4A', a cam surface 25A₂ formed on an axial outer surface of the first auxiliary rotor 4C', and a rolling body 25A₃ arranged between the cam surfaces 25A₁ and 25A₂. Similarly, the loading cam mechanism 25B includes a cam surface 25B₂ formed on an axial outer surface of the second auxiliary rotor 4C', a cam surface 25B₁ formed on an axial inner surface of the second drive rotor 4B', and a rolling body 25B₃ arranged between the cam surfaces 25B₁ and 25B₂. The loading cam mechanism 25A is configured and arranged such that an axial force is generated when an angular phase difference occurs between the first drive rotor 4A' and the first auxiliary rotor 4C'. The loading cam mechanism 25B is configured and arranged such that an axial force is generated when an angular phase difference occurs between the second auxiliary rotor 4C' and the second drive rotor 4B'. Thus, in the second embodiment illustrated in Figure 2, the first and second auxiliary rotors 4C' and 4D' and the loading cam mechanisms 25A and 25B correspond to a magnetic resistance changing mechanism of the present invention.

The first and second auxiliary rotors 4C' and 4D' are rotatably supported on the rotary shaft 2 with a pair of bearings 29A and 29B, respectively. Moreover, as shown in Figure 2, the motor/generator 1' includes a pair of stoppers 30A and 30B to restrict axial movements of the first and second auxiliary rotors 4C' and 4D' toward the stator 3.

Also, the motor/generator 1' further includes a pair of Belleville springs 27A and 27B and a pair of stoppers 26A and 26B. The Belleville springs 27A and 27B are configured and arranged to spring load the first and second drive rotors 4A' and 4B' toward the stator 3. The stoppers 26A and 26B are configured and arranged to position the Belleville springs 27A and 27B.

With the motor/generator 1' of the second embodiment, when the coils 12 are energized with the first current component of the composite electrical current, the stator 3 is configured and arranged to generate the first magnetic field H1 that rotatably drives the first and second drive rotors 4A' and 4B'. Therefore, the rotary shaft 2 is rotated along with the rotation of the first and second drive rotors 4A' and 4B'.

On the other hand, when the coils 12 are energized with the second current component of the composite electrical current, the stator 3 is configured and arranged to generate the second magnetic field H2 that drives the first and second auxiliary rotors 4C' and 4D'. By changing (differentiating) the drive forces acting on the first and second auxiliary rotors 4C' and 4D' from the drive forces acting on the first and second drive rotors 4A' and 4B' using the first and second current components of the composite electrical current, an angular phase difference can be produced between the first auxiliary rotor 4C' and the first drive rotor 4A' and between the second auxiliary rotor 4D' and the second drive rotor 4B'. The angular phase difference causes the loading cam mechanisms 25A and 25B to operate and move the first and second drive rotors 4A' and 4B' farther away from the stator 3 along the axial direction of the rotary shaft 2. As a result, the lengths of the axial gaps g1 between the first and second drive rotors 4A' and 4B' and the stator 3increase. Therefore, the magnetic resistance between the stator 3 and the first and second drive rotors 4A' and 4B' increases.

Accordingly, the motor/generator 1' of the second embodiment can achieve the same effects as in the motor/generator 1 of the first embodiment as explained above. In addition, the force produced by the second current component of the composite electrical current for increasing the lengths of the axial gaps g1 is transmitted from the first and second auxiliary rotors 4C' and 4D' to the rotary shaft 2 through the loading cam mechanisms 25A and 25B and the first and second drive rotors 4A' and 4B'. Therefore, the force produced by the second current component also serves as a force that drives the rotary shaft 2. Thus, the second current component supplied in order to increase the magnetic resistance can be used effectively as a drive force in the second embodiment of the present invention.

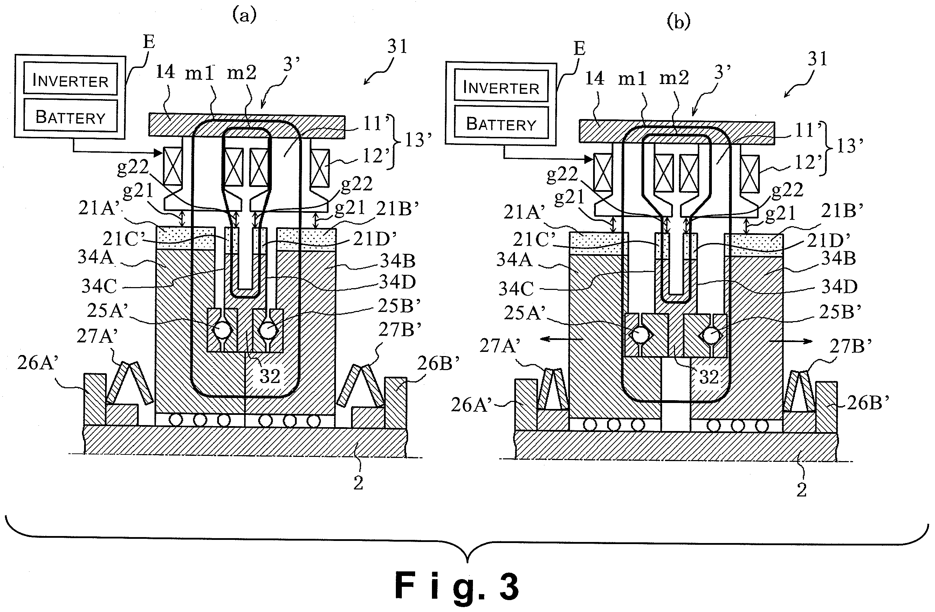

Referring now to Figure 3, a motor/generator 31 in accordance with a third embodiment will now be explained. In view of the similarity between the first, second and third embodiments, the parts of the third embodiment that are identical to the parts of the first or second embodiment will be given the same reference numerals as the parts of the first or second embodiment. Moreover, the descriptions of the parts of the third embodiment that are identical to the parts of the first or second embodiment may be omitted for the sake of brevity. The parts of the third embodiment that differ from the parts of the first or second embodiment will be indicated with a single prime (').

Figure 3 is a pair of diagrams (a) and (b) illustrating simplified cross sectional views of the motor/generator 31 taken along a center axis of the rotary shaft 2 of the motor/generator 31 in accordance with the third embodiment of the present invention. The diagram (a) of Figure 3 illustrates a low rotations speed state of the motor/generator 31 and the diagram (b) of Figure 3 illustrates a high rotational speed state of the motor/generator 31. In the third embodiment, the motor/generator 31 is arranged as a radial gap type motor/generator in which a stator 3' and a pair of first and second drive rotors 34A and 34B are arranged to face each other across radial gaps g21 as shown in the diagrams (a) and (b) of Figure 3. In other words, the stator 3' and the first and second drive rotors 34A and 34B are positioned such that the first and second drive rotors 34A and 34B and the stator 3' at least partially overlap as viewed in a radial direction with respect to the rotary shaft 2. The first and second drive rotors 34A and 34B include permanent magnets 21A' and 21 B', respectively, which are disposed on circumferential surfaces of the first and second drive rotors 34A and 34B.

More specifically, the motor/generator 31 includes the stator 3', the first and second drive rotors 34A and 34B (first rotor member), a pair of first and second auxiliary rotors 34C and 34D (second rotor member) and a pair of loading cam mechanisms 25A' and 25B' (power converting mechanism). The structures of the loading cam mechanisms 25A' and 25B' are the same as the structures of the loading cam mechanisms 25A and 25B of the second embodiment illustrated in Figure 2.

In the third embodiment, the first and second auxiliary rotors 34C and 34D are also arranged to face the stator 3' across radial gaps g22 as shown in the diagrams (a) and (b) of Figure 3. Moreover, the first and second auxiliary rotors 34C and 34D are formed as an integral part of at a base part 32 of the first and second auxiliary rotors 34C and 34D, which is located closer (radially inwardly) to the rotary shaft 2. Furthermore, in the third embodiment, the first and second auxiliary rotors 34C and 34D include a plurality of permanent magnets 21 C' and 21 D', respectively, that are disposed on the circumferential surfaces of the first and second auxiliary rotors 34C and 34D as shown in the diagrams (a) and (b) of Figure 3. Alternatively, the first and second auxiliary rotors 34C and 34D can be provided with a plurality of protrusions and a plurality of recessions that are alternately arranged on the circumferential surfaces of the first and second auxiliary rotors 34C and 34D similarly to the first and second auxiliary rotors 4C and 4D of the first embodiment described above.

The loading cam mechanism 25A' is provided between the base part 32 (of the first and second auxiliary rotors 34C and 34D) and the first drive rotor 34A. The loading cam mechanism 25B' is provided between the base part 32 and the second drive rotor 34B. Alternatively, it is also acceptable to provide a single loading cam mechanism 25A' or 25B' on only one axial side of the base part 32.

The stator 3' includes a plurality of stator units 13' that are arranged circumferentially with respect to the rotary shaft 2 and supported in the case member 14. Each of the stator units 13' includes a stator core 11' and a coil 12' wound around the stator core 11' as shown in the diagrams (a) and (b) of Figure 3.

With the motor/generator 31 of the third embodiment, when the coils 12' are energized with the first current component of the composite electrical current, the stator 3' is configured and arranged to generate a first magnetic field causing a first magnetic circuit m1 that drives the first and second drive rotors 34A and 34B. Therefore, the rotary shaft 2 is rotated along with the rotation of the first and second drive rotors 34A and 34B.

On the other hand, when the coils 12' are energized with the second current component of the composite electrical current, the stator 3' is configured and arranged to generate a second magnetic field causing a second magnetic circuit m2 that drives the first and second auxiliary rotors 34C and 34D. By changing (differentiating) the drive forces acting on the first and second auxiliary rotors 34C and 34D from the drive forces acting on the first and second drive rotors 34A and 34B, an angular phase difference can be produced between the first auxiliary rotor 34C and the first drive rotor 34A and between the second auxiliary rotor 34D and the second drive rotor 34B. The angular phase difference causes the loading cam mechanisms 25A' and 25B' to operate and move the first and second drive rotors 34A and 34B farther away from the stator 3' along the axial direction of the rotary shaft 2. When the first and second drive rotors 34A and 34B move away from the stator 3' in the axial direction, a circumferential area (surface area) of the first and second drive rotors 34A and 34B that overlap the stator 3' (the stator units 13') as viewed in the radial direction decreases. Accordingly, the magnetic resistance between the stator 3' and the first and second drive rotors 34A and 34B increases. Thus, in the third embodiment illustrated in Figure 3, the first and second auxiliary rotors 34C and 34D and the loading cam mechanisms 25A' and 25B' correspond to a magnetic resistance changing mechanism of the present invention.

Referring to the diagrams (a) and (b) of Figure 3, the operation of the third embodiment will now be explained in more detail. The diagram (a) of Figure 3 shows the state of the motor/generator 31 when the rotational speed is low. In such case, the composite electrical current supplied to the coils 12' from the electric circuit E is set such that the first and second drive rotors 34A and 34B and the first and second auxiliary rotors 34C and 34D are rotated with the same drive force to maintain the positional relationship therebetween as shown in the diagram (a) of Figure 3. Consequently, the axial cross sectional area of the space where the radial gaps g21 exist between the stator 3' and the first and second drive rotors 34A and 34B is maximized. In other words, the circumferential area of the first and second drive rotors 34A and 34B that overlap the stator units 13' as viewed in the radial direction is maximized.

On the other hand, the diagram (b) of Figure 3 shows the state of the motor/generator 31 when the rotational speed is high. In such case, the composite electrical current supplied to the coils 12' from the electric circuit E is controlled such that the drive force acting on the first and second drive rotors 34A and 34B is different from the drive forces acting on the first and second auxiliary rotors 34C and 34D, and thus, an angular phase difference develops between the first and second auxiliary rotors 34C and 34D and the first and second drive rotors 34A and 34B. As a result, the loading cam mechanisms 25A' and 25B' are configured and arranged to operate to move the first and second drive rotors 34A and 34B farther away from the stator 3' in the axial direction. Consequently, the axial cross sectional area of the space where the radial gaps g21 exist between the stator 3' and the first and second drive rotors 34A and 34B is reduced. In other words, the circumferential area of the first and second drive rotors 34A and 34B that overlap the stator units 13' as viewed in the radial direction is reduced. The reduction of the axial cross sectional area of the spaces where the axial gaps g21 exist causes the magnetic resistance between the stator 3' and the first and second drive rotors 34A and 34B to increase.

Accordingly, the motor/generator 31 of the third embodiment shown in the diagrams (a) and (b) of Figure 3 can achieve the same operational effects as the first and second embodiments shown in Figures 1 and 2.

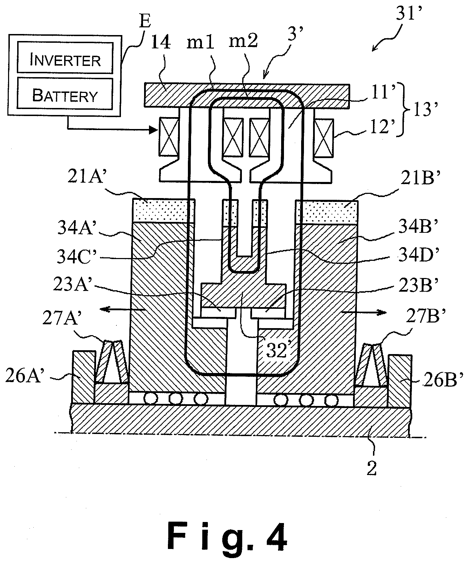

Referring now to Figure 4, a motor/generator 31' in accordance with a fourth embodiment will now be explained. In view of the similarity between the first, third and fourth embodiments, the parts of the fourth embodiment that are identical to the parts of the first or third embodiment will be given the same reference numerals as the parts of the first or third embodiment. Moreover, the descriptions of the parts of the fourth embodiment that are identical to the parts of the first or third embodiment may be omitted for the sake of brevity. The parts of the fourth embodiment that differ from the parts of the first or third embodiment will be indicated with a single prime (').

The motor/generator 31' of the fourth embodiment differs from the motor/generator 31 of the third embodiment in a mechanism for moving first and second drive rotors 34A' and 34B' (first rotor member) in the axial direction. More specifically, the motor/generator 31' of the fourth embodiment includes a pair of screw sections 23A' and 23B' (power converting mechanism) between a base part 32' of a pair of first and second auxiliary drive rotors 34C' and 34D' (second rotor member) and the first and second drive rotors 34A' and 34B' instead of the loading cam mechanisms 25A' and 25B' used in the third embodiment shown in Figure 3. The structures of the screw sections 23A' and 23B' are similar to the structures of the screw sections 23A and 23B of the motor/generator 1 of the first embodiment (Figure 1) described above.

In the fourth embodiment, the screw sections 23A' and 23B' are configured and arranged to move the first and second drive rotors 34A' and 34B' in the axial direction with respect to the first and second auxiliary rotors 34C' and 34D' by driving the first and second auxiliary rotors 34C' and 34D' (the base part 32') with the second current component of the composite electrical current. More specifically, the first current component of the composite electrical current forms the first magnetic circuit m1 with the first magnetic field for driving the first and second drive rotors 34A' and 34B', and the second current component of the composite electrical current forms the second magnetic circuit m2 with the second magnetic field for driving the first and second auxiliary rotors 34C' and 34D'. Thus, in the fourth embodiment illustrated in Figure 4, the first and second auxiliary rotors 34C' and 34D' and the screw sections 23A' and 23B' correspond to a magnetic resistance changing mechanism of the present invention.

Accordingly, the motor/generator 31' of the fourth embodiment shown in Figure 4 can achieve the same operational effects as the first through third embodiments shown in Figures 1 through 3.

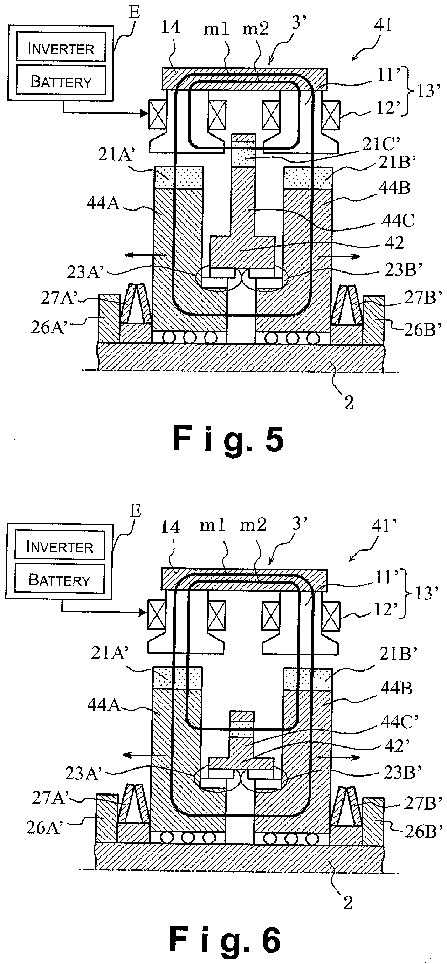

Referring now to Figure 5, a motor/generator 41 in accordance with a fifth embodiment will now be explained. In view of the similarity between the fourth and fifth embodiments, the parts of the fifth embodiment that are identical to the parts of the fourth embodiment will be given the same reference numerals as the parts of the fourth embodiment. Moreover, the descriptions of the parts of the fifth embodiment that are identical to the parts of the fourth embodiment may be omitted for the sake of brevity. The parts of the fifth embodiment that differ from the parts of the fourth embodiment will be indicated with a single prime (').

The motor/generator 41 of the fifth embodiment differs from the motor/generators of the first through fourth embodiments described above in that the motor/generator 41 of the fifth embodiment combines an axial gap structure and a radial gap structure together. More specifically, as shown Figure 5, in the motor/generator 41, a radial gap type motor/generator portion for generating torque is formed by the stator 3' and a pair of first and second drive rotors 44A and 44B (first rotor member) that are arranged coaxially about the rotary shaft 2. On the other hand, an axial gap type motor/generator portion is formed by an auxiliary rotor 44C (second rotor member) (only one auxiliary rotor 44C is provided in the fifth embodiment). The auxiliary rotor 44C includes a base part 42 and a circumferential end portion. The circumferential end portion of the auxiliary rotor 44C extends between adjacent pair of the stator units 13' as shown in Figure 5. The permanent magnets 21 C' are disposed in the circumferential end portion of the auxiliary rotor 44C so that the permanent magnets 21 C' and the stator 3' form the second magnetic circuit m2 with the second magnetic field when the coils 12' are energized with the second current component of the composite electric current.

The screw sections 23A' and 23B' are provided between the base part 42 of the auxiliary rotor 44C and the first and second drive rotors 44A and 44B. Similarly to the fourth embodiment, the screw sections 23A' and 23B' are configured and arranged to move the first and second drive rotors 44A and 44B in the axial direction with respect to the auxiliary rotors 44C by driving the auxiliary rotor 44C (the base part 42) with the second current component of the composite electrical current (the second magnetic circuit m2). Thus, the auxiliary rotor 44C serves as an actuator that moves the first and second drive rotors 44A and 44B in the axial direction. In the fifth embodiment illustrated in Figure 5, the auxiliary rotor 44C and the screw sections 23A' and 23B' correspond to a magnetic resistance changing mechanism of the present invention.

Accordingly, the motor/generator 41 of the fifth embodiment shown in Figure 5 can achieve the same operational effects as the first through fourth embodiments shown in Figures 1 through 4.

Referring now to Figure 6, a motor/generator 41' in accordance with a sixth embodiment will now be explained. In view of the similarity between the fifth and sixth embodiments, the parts of the sixth embodiment that are identical to the parts of the fifth embodiment will be given the same reference numerals as the parts of the fifth embodiment. Moreover, the descriptions of the parts of the sixth embodiment that are identical to the parts of the fifth embodiment may be omitted for the sake of brevity. The parts of the sixth embodiment that differ from the parts of the fifth embodiment will be indicated with a single prime (').

The motor/generator 41' of the sixth embodiment is basically identical to the motor/generator 41 of the first embodiment except that the radial length of an auxiliary rotor 44C' (second rotor member) is changed such that the circumferential end portion of the auxiliary rotor 44C' does not extend between the stator units 13'. Similarly to the fifth embodiment, the auxiliary rotor 44C' of the sixth embodiment forms an axial gap type motor/generator portion that serves as an actuator configured and arranged to move the first and second drive rotors 44A and 44B in the axial direction with respect to the auxiliary rotors 44C by driving the auxiliary rotor 44C' (a base part 42') with the second current component of the composite electrical current (the second magnetic circuit m2). In the sixth embodiment illustrated in Figure 6, the auxiliary rotor 44C' and the screw sections 23A' and 23B' correspond to a magnetic resistance changing mechanism of the present invention.

Accordingly, the motor/generator 41' of the sixth embodiment shown in Figure 6 can achieve the same operational effects as the first through fifth embodiments shown in Figures 1 through 6.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. Moreover, terms that are expressed as "means-plus function" in the claims should include any structure that can be utilized to carry out the function of that part of the present invention. The terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, the size, shape, location or orientation of the various components can be changed as needed and/or desired. Components that are shown directly connected or contacting each other can have intermediate structures disposed between them. The functions of one element can be performed by two, and vice versa. The structures and functions of one embodiment can be adopted in another embodiment. It is not necessary for all advantages to be present in a particular embodiment at the same time. Thus, the foregoing descriptions of the embodiments according to the present invention are provided for illustration only, and not for the purpose of limiting the invention as defined by the appended claims and their equivalents.

## Claims

1. A motor/generator (1) comprising:
magnetic field generating means for generating a first magnetic field (H1), wherein the magnetic field generating means comprises a stator (3) having a plurality of coils (12)
drive force outputting means for generating and outputting a rotary drive force using a first magnetic circuit (m1) formed by the first magnetic field (H1), wherein the drive force outputting means comprises a first rotor member (4A, 4B), which is arranged to be rotated with respect to the stator (3) using the first magnetic field (H1); and
a magnetic resistance changing mechanism (4C, 4D and 23A, 23B) for changing a magnetic resistance of the first magnetic circuit (m1), wherein
the first magnetic circuit (m1) is formed between the stator (3) and the first rotor member (4A, 4B); and
the magnetic resistance changing mechanism (4C, 4D and 23A, 23B) comprises a mechanism arranged to change the magnetic resistance between the stator (3) and the first rotor member (4A, 4B),
**characterized in that**
the magnetic field generating means is arranged to generate the first magnetic field (H1) and a second magnetic field (H2), when energized with an electrical current having a first current component and a second current component to generate the first and the second magnetic field, respectively, wherein the stator (3) is arranged to be energized with the electrical current having the first current component and the second current component to generate the first and second magnetic field (H1, H2); and
the magnetic resistance changing mechanism (4C, 4D and 23A, 23B) is arranged to change a magnetic resistance of the first magnetic circuit (m1) by using the second magnetic field (H2), wherein the mechanism of the magnetic resistance changing mechanism (4C, 4D and 23A, 23B) is arranged to change the magnetic resistance between the stator (3) and the first rotor member (4A, 4B) using the second magnetic field (H2).

2. A motor/generator (1) as claimed in claim 1, wherein:
the first rotor member (4A, 4B) is disposed to face the stator (3) with axial gaps (g1) being formed between the first rotor member (4A, 4B) and the stator (3) with respect to a rotary shaft (2) of the first rotor member (4A, 4B), and
the magnetic resistance changing mechanism (4C, 4D and 23A, 23B) is arranged to change a length of the axial gaps (g1) between the first rotor member (4A, 4B) and the stator (3) by using the second magnetic field (H2) to generate an axial force to move the first rotor member (4A, 4B) in opposite axial directions.

3. A motor/generator (1) as claimed in claim 2, wherein:
the first rotor member (4A, 4B) is disposed to face the stator (3) with a radial gap being formed between the first rotor member (4A, 4B) and the stator (3) such that the first rotor member (4A, 4B) and the stator (3) at least partially overlap as viewed in a radial direction with respect to a rotary shaft (2) of the first rotor member (4A, 4B), and
the magnetic resistance changing mechanism (4C, 4D and 23A, 23B) is arranged to change a circumferential area of the first rotor member (4A, 4B) that overlaps with the stator (3) as viewed in the radial direction by using the second magnetic field (H2) to generate an axial force to move the first rotor member (4A, 4B) in an axial direction.

4. A motor/generator (1) as claimed in any of claims 2 to 3, wherein the magnetic resistance changing mechanism (4C, 4D and 23A, 23B) includes:
a second rotor member (4C, 4D) disposed to face the stator (3) with a radial gap (g2) being formed between the second rotor member and the stator (3) with respect to the rotary shaft (2), the second rotor member (4C, 4D) being configured and arranged to be driven by using the second magnetic field (H2); and
a power converting mechanism (23A, 23B or 25A, 25B) configured and arranged to convert torque of the second rotor member (4C, 4D) into the axial force t to move the first and second drive rotors (4A, 4B) of the first rotor member (4A, 4B) in opposite axial directions.

5. A motor/generator (1) as claimed in claim 4 wherein the power converting mechanism (23A, 23B) includes a screw section formed between the second rotor member (4C, 4D) and the rotary shaft (2).

6. A motor/generator (1) as claimed in claim 4, wherein the screw section is formed between the first rotor member (4A, 4B) and the second rotor member (4C, 4D).

7. A motor/generator (1) as claimed in any of claims 4 to 6, wherein the power converting mechanism (25A, 25B) includes a loading cam mechanism formed between the first rotor member (4A, 4B) and the second rotor member (4C, 4D).

8. A motor/generator (1) as claimed in any preceding claim wherein the magnetic resistance changing mechanism includes:
a second rotor member (4C, 4D) disposed to face the stator (3) with an axial gap being formed between the second rotor member (4C, 4D) and the stator (3) with respect to the rotary shaft (2), the second rotor member (4C, 4D) being arranged to be driven by using the second magnetic field (H2); and
a power converting mechanism (23A, 23B or 25A, 25B) arranged to convert torque of the second rotor member (4C, 4D) into the axial force to move the first and second drive rotors (4A, 4B) of the first rotor member (4A, 4B) in opposite axial directions.

9. A vehicle having a motor/generator (1) as claimed in any preceding claim.

## Patentansprüche

1. Motor/Generator (1), umfassend:
eine Magnetfelderzeugungseinrichtung zum Erzeugen eines ersten Magnetfeldes (H1), wobei die Magnetfelderzeugungseinrichtung einen Stator (3) mit einer Vielzahl von Spulen (12) aufweist,
eine Antriebskraftausgabeeinrichtung zum Erzeugen und Ausgeben einer Drehantriebskraft unter Verwendung eines durch das erste Magnetfeld (H1) gebildeten ersten Magnetkreises (m1), wobei die Antriebskraftausgabeeinrichtung ein erstes Rotorelement (4A, 4B) aufweist, das ausgelegt ist, um in Bezug auf den Stator (3) unter Verwendung des ersten Magnetfelds (H1) gedreht zu werden; und
einen Magnetwiderstandsänderungsmechanismus (4C, 4D und 23A, 23B) zum Verändern eines magnetischen Widerstandes des ersten Magnetkreises (m1), wobei
der erste Magnetkreis (m1) zwischen dem Stator (3) und dem ersten Rotorelement (4A, 4B) ausgebildet ist; und
der Magnetwiderstandsveränderungsmechanismus (4C, 4D und 23A, 23B) einen Mechanismus aufweist, der zum Verändern des magnetischen Widerstands zwischen dem Stator (3) und dem ersten Rotorelement (4A, 4B) ausgelegt ist,
**dadurch gekennzeichnet, dass**
die Magnetfelderzeugungseinrichtung zum Erzeugen des ersten Magnetfeldes (H1) und eines zweiten Magnetfeldes (H2) bei Erregung mittels eines elektrischen Stroms mit einer ersten Stromkomponente und einer zweiten Stromkomponente ausgelegt ist, um jeweils das erste und das zweite Magnetfeld zu erzeugen, wobei der Stator (3) ausgelegt ist, mittels des elektrischen Stroms mit der ersten Stromkomponente und der zweiten Stromkomponente zum Erzeugen des ersten und des zweiten Magnetfelds (H1, H2) erregt zu werden; und
der Magnetwiderstandsveränderungsmechanismus (4C, 4D und 23A, 23B) zum Verändern eines magnetischen Widerstandes des ersten Magnetkreises (m1) unter Verwendung des zweiten Magnetfelds (H2) ausgelegt ist, wobei der Mechanismus des Magnetwiderstandsveränderungsmechanismus (4C, 4D und 23A, 23B) zum Verändern des magnetischen Widerstands zwischen dem Stator (3) und dem ersten Rotorelement (4A, 4B) unter Verwendung des zweiten Magnetfelds (H2) ausgelegt ist.

2. Motor/Generator (1) nach Anspruch 1, wobei:
das erste Rotorelement (4A, 4B) dem Stator (3) mit axialen Zwischenräumen (gl) gegenüberliegend angeordnet ist, die zwischen dem Rotorelement 4A, 4B) und dem Stator (3) in Bezug auf eine Drehwelle (2) des ersten Rotorelements (4A, 4B) ausgebildet sind, und
der Magnetwiderstandsveränderungsmechanismus (4C, 4D und 23A, 23B) zum Verändern einer Länge der axialen Zwischenräume (g1) zwischen dem erstes Rotorelement (4A, 4B) und dem Stator (3) unter Verwendung des zweiten Magnetfelds (H2) zum Erzeugen einer Axialkraft zum Bewegen des ersten Rotorelements (4A, 4B) in entgegengesetzten axialen Richtungen ausgelegt ist.

3. Motor/Generator (1) nach Anspruch 2, wobei:
das erste Rotorelement (4A, 4B) dem Stator (3) mit einem radialen Zwischenraum gegenüberliegend angeordnet ist, der zwischen dem ersten Rotorelement (4A, 4B) und dem Stator (3) derart angeordnet ist, dass sich das erste Rotorelement (4A, 4B) und der Stator (3) zumindest teilweise in radialer Richtung gesehen in Bezug auf eine Drehwelle (2) des ersten Rotorelements (4A, 4B) überlappen, und
der Magnetwiderstandsveränderungsmechanismus (4C, 4D und 23A, 23B) zum Verändern eines Umfangsbereichs des ersten Rotorelements (4A, 4B), das den Stator in radialer Richtung gesehen überlappt, unter Verwendung des zweiten Magnetfelds (H2) zum Erzeugen einer Axialkraft zum Bewegen des ersten Rotorelements (4A, 4B) in axialer Richtung ausgelegt ist.

4. Motor/Generator (1) nach einem der Ansprüche 2 bis 3, wobei der Magnetwiderstandsveränderungsmechanismus (4C, 4D und 23A, 23B) umfasst:
ein zweites Rotorelement (4C, 4D), das dem Stator (3) mit einem radialen Zwischenraum (g2) gegenüberliegend angeordnet ist, der zwischen dem zweiten Rotorelement und dem Stator (3) in Bezug auf die Drehwelle (2) ausgebildet ist, wobei das zweite Rotorelement (4C, 4D) konfiguriert und ausgelegt ist, unter Verwendung des zweiten Magnetfelds (H2) angetrieben zu werden; und
einen Leistungsumwandlungsmechanismus (23A, 23B oder 25A, 25B), der zum Umwandeln eines Drehmoments des zweiten Rotorelements (4C, 4D) in die Axialkraft t zum Bewegen der ersten und zweiten Antriebsrotoren (4A, 4B) des ersten Rotorelements (4A, 4B) in entgegengesetzte Axialrichtungen konfiguriert und ausgelegt ist.

5. Motor/Generator (1) nach Anspruch 4, wobei der Leistungsumwandlungsmechanismus (23A, 23B) einen Schraubenabschnitt umfasst, der zwischen dem zweiten Rotorelement (4C, 4D) und der Drehwelle (2) ausgebildet ist.

6. Motor/Generator nach Anspruch 4, wobei der Schraubenabschnitt zwischen dem ersten Rotorelement (4A, 4B) und dem zweiten Rotorelement (4C, 4D) ausgebildet ist.

7. Motor/Generator nach einem der Ansprüche 4 bis 6, wobei der Leistungsumwandlungsmechanismus (25A, 25B) einen Ladungsnockenmechanismus umfasst, der zwischen dem ersten Rotorelement (4A, 4B) und dem zweiten Rotorelement (4C, 4D) ausgebildet ist.

8. Motor/Generator (1) nach einem der vorhergehenden Ansprüche, wobei der Magnetwiderstandsveränderungsmechanismus umfasst:
ein zweites Rotorelement (4C, 4D), das dem Stator (3) mit einem axialen Zwischenraum gegenüberliegend angeordnet ist, der zwischen dem zweiten Rotorelement (4C, 4D) und dem Stator (3) in Bezug auf die Drehwelle (2) ausgebildet ist, wobei das zweite Rotorelement (4C, 4D) ausgelegt ist, unter Verwendung des zweiten Magnetfelds (H2) angetrieben zu werden; und
einen Leistungsumwandlungsmechanismus (23A, 23B oder 25A, 25B), der zum Umwandeln eines Drehmoments des zweiten Rotorelements (4C, 4D) in die Axialkraft zum Bewegen der ersten und zweiten Antriebsrotoren (4A, 4B) des ersten Rotorelements (4A, 4B) in entgegengesetzte Axialrichtungen ausgelegt ist.

9. Fahrzeug, das einen Motor/Generator (1) nach einem der vorhergehenden Ansprüche aufweist.

## Revendications

1. Moteur/générateur (1) comprenant :
un moyen de génération de champ magnétique pour générer un premier champ magnétique (H1), dans lequel le moyen de génération de champ magnétique comprend un stator (3) ayant une pluralité de bobines (12)
un moyen de sortie de force d'entraînement pour générer et délivrer en sortie une force d'entraînement rotative en utilisant un premier circuit magnétique (m1) formé par le premier champ magnétique (H1), où le moyen de sortie de force d'entraînement comprend un premier élément de rotor (4A, 4B), qui est agencé pour être mis en rotation par rapport au stator (3) en utilisant le premier champ magnétique (H1) ; et
un mécanisme de changement de résistance magnétique (4C, 4D et 23A, 23B) pour changer une résistance magnétique du premier circuit magnétique (m1), où
le premier circuit magnétique (m1) est formé entre le stator (3) et le premier élément de rotor (4A, 4B) ; et
le mécanisme de changement de résistance magnétique (4C, 4D et 23A, 23B) comprend un mécanisme agencé pour changer la résistance magnétique entre le stator (3) et le premier élément de rotor (4A, 4B),
**caractérisé en ce que**
le moyen de génération de champ magnétique est agencé pour générer le premier champ magnétique (H1) et un deuxième champ magnétique (H2), lorsqu'il est excité par un courant électrique ayant une première composante de courant et une deuxième composante de courant pour générer les premier et deuxième champs magnétiques, respectivement, où le stator (3) est agencé de manière à être excité par le courant électrique ayant la première composante de courant et la deuxième composante de courant pour générer les premier et deuxième champs magnétiques (H1, H2) ; et
le mécanisme de changement de résistance magnétique (4C, 4D et 23A, 23B) est agencé pour changer une résistance magnétique du premier circuit magnétique (m1) en utilisant le deuxième champ magnétique (H2), où le mécanisme du mécanisme de changement de résistance magnétique (4C, 4D et 23A, 23B) est agencé pour changer la résistance magnétique entre le stator (3) et le premier élément de rotor (4A, 4B) en utilisant le deuxième champ magnétique (H2).

2. Moteur/générateur (1) tel que revendiqué dans la revendication 1, dans lequel :
le premier élément de rotor (4A, 4B) est disposé en regard du stator (3) avec des écarts axiaux (g1) étant formés entre le premier élément de rotor (4A, 4B) et le stator (3) par rapport à un arbre rotatif (2) du premier élément de rotor (4A, 4B), et
le mécanisme de changement de résistance magnétique (4C, 4D et 23A, 23B) est agencé pour changer une longueur des écarts axiaux (g1) entre le premier élément de rotor (4A, 4B) et le stator (3) en utilisant le deuxième champ magnétique (H2) pour générer une force axiale afin de déplacer le premier élément de rotor (4A, 4B) dans des directions axiales opposées.

3. Moteur/générateur (1) tel que revendiqué dans la revendication 2, dans lequel :
le premier élément de rotor (4A, 4B) est disposé en regard du stator (3) avec un écart radial étant formé entre le premier élément de rotor (4A, 4B) et le stator (3) de sorte que le premier élément de rotor (4A, 4B)) et le stator (3) se chevauchent au moins partiellement tels que vus dans une direction radiale par rapport à un arbre rotatif (2) du premier élément de rotor (4A, 4B), et
le mécanisme de changement de résistance magnétique (4C, 4D et 23A, 23B) est agencé pour changer une zone circonférentielle du premier élément de rotor (4A, 4B) qui chevauche le stator (3) telle que vue dans la direction radiale en utilisant le deuxième champ magnétique (H2) pour générer une force axiale afin de déplacer le premier élément de rotor (4A, 4B) dans une direction axiale.

4. Moteur/générateur (1) tel que revendiqué dans l'une des revendications 2 et 3, dans lequel le mécanisme de changement de résistance magnétique (4C, 4D et 23A, 23B) comporte :
un deuxième élément de rotor (4C, 4D) disposé en regard du stator (3) avec un écart radial (g2) étant formé entre le deuxième élément de rotor et le stator (3) par rapport à l'arbre rotatif (2), le deuxième élément de rotor (4C, 4D) étant configuré et agencé pour être entraîné en utilisant le deuxième champ magnétique (H2) ; et
un mécanisme de conversion de puissance (23A, 23B ou 25A, 25B) configuré et agencé pour convertir un couple du deuxième élément de rotor (4C, 4D) en la force axiale pour déplacer les premier et deuxième rotors d'entraînement (4A, 4B) du premier élément de rotor (4A, 4B) dans des directions axiales opposées.

5. Moteur/générateur (1) tel que revendiqué dans la revendication 4, dans lequel le mécanisme de conversion de puissance (23A, 23B) comporte une section de vis formée entre le deuxième élément de rotor (4C, 4D) et l'arbre rotatif (2).

6. Moteur/générateur (1) tel que revendiqué dans la revendication 4, dans lequel la section de vis est formée entre le premier élément de rotor (4A, 4B) et le deuxième élément de rotor (4C, 4D).

7. Moteur/générateur (1) tel que revendiqué dans l'une des revendications 4 à 6, dans lequel le mécanisme de conversion de puissance (25A, 25B) comporte un mécanisme de came de chargement formé entre le premier élément de rotor (4A, 4B) et le deuxième élément de rotor (4C, 4D).

8. Moteur/générateur (1) tel que revendiqué dans l'une des revendications précédentes, dans lequel le mécanisme de changement de résistance magnétique comporte :
un deuxième élément de rotor (4C, 4D) disposé en regard du stator (3) avec un écart axial étant formé entre le deuxième élément de rotor (4C, 4D) et le stator (3) par rapport à l'arbre rotatif (2), le deuxième élément de rotor (4C, 4D) étant agencé pour être entraîné en utilisant le deuxième champ magnétique (H2) ; et
un mécanisme de conversion de puissance (23A, 23B ou 25A, 25B) agencé pour convertir un couple du deuxième élément de rotor (4C, 4D) en la force axiale pour déplacer les premier et deuxième rotors d'entraînement (4A, 4B) du premier élément de rotor (4A, 4B) dans des directions axiales opposées.

9. Véhicule ayant un moteur/générateur (1) tel que revendiqué dans l'une des revendications précédentes.
